# FASCICULE DE BREVET EUROPEEN

(11) **EP 2 705 889 B1**
(45) Date de publication et mention de la délivrance du brevet: **08.06.2016**
(21) Numéro de dépôt: 13182123.3
(22) Date de dépôt: 29.08.2013
(51) Int. Cl.: B01D 36/00

(54) **Filtre à carburant séparateur d'eau et utilisation de deux éléments séparateurs d'eau dans un filtre à carburant**
Kraftstofffilter zur Abscheidung von Wasser, und Verwendung zweier Wasserabscheideelemente in einem Kraftstofffilter
Fuel filter with water separating arrangement and use of two water separating elements in a fuel filter

(30) Priorité: 05.09.2012 FR 1258268
(43) Date de publication de la demande: 12.03.2014
(73) Titulaire: FILTRAUTO, 78280 Guyancourt (FR)
(72) Inventeur: LALLEMAN, Xavier, 94200 IVRY SUR SEINE (FR); REPERANT, Romain, 95240 CORMEILLES EN PARISIS (FR)
(74) Mandataire: Cabinet Plasseraud

(56) Documents cités:
- EP-A2- 1 267 068
- DE-A1- 3 046 179
- US-A- 2 580 209
- US-A1- 2002 195 387
- US-A1- 2008 105 629
- US-B2- 6 716 349

## Description

### DOMAINE TECHNIQUE DE L'INVENTION

La présente invention est relative aux agencements de séparation d'eau pour séparer l'eau d'un carburant. L'invention concerne également des filtres à carburant, et en particulier des filtres séparant l'eau contenue dans un carburant liquide et comportant un compartiment inférieur pour collecter cette eau.

Plus particulièrement, l'invention concerne l'utilisation à l'intérieur d'un boîtier de filtre à carburant d'un agencement de séparation d'eau pour circuit de circulation de carburant d'un moteur à combustion interne, le boîtier étant pourvu d'une chambre inférieure de collecte d'eau, l'agencement comprenant :
- un premier élément séparateur d'eau ;
- un deuxième élément séparateur d'eau ;
- des moyens de support permettant de maintenir espacés entre eux le premier élément séparateur d'eau et le deuxième élément séparateur d'eau.

### ARRIERE-PLAN TECHNOLOGIQUE DE L'INVENTION

Le brevet US 6 716 349 B2 de SOGEFI FILTRATION décrit un exemple de filtre à carburant, en particulier à gazole, utilisé dans des véhicules à moteur à explosion (domaine automobile notamment) et qui utilise un tel genre d'agencement de séparation d'eau. Le boîtier du filtre à carburant permet de loger un élément filtrant auquel est associé l'agencement de séparation d'eau. Le boîtier présente une entrée de carburant brut et une sortie de carburant filtré, l'entrée et la sortie étant agencées à distance du fond. L'élément filtrant est typiquement disposé dans un compartiment supérieur défini à l'intérieur du boîtier, cet élément filtrant délimitant une zone amont communiquant avec l'entrée de carburant brut et une zone aval. L'eau séparée à l'aide de l'agencement de séparation est collectée dans la chambre inférieure.

Le filtre à carburant décrit dans le brevet US 6 716 349 B2 possède un agencement de séparation d'eau qui comprend un premier élément séparateur d'eau et un deuxième élément séparateur d'eau pour séparer l'eau dans la zone aval. L'élément filtrant est monté de façon telle que le seul circuit possible pour le carburant de l'entrée à la sortie passe à travers le média filtrant de l'élément filtrant, depuis un espace annulaire externe vers un espace intérieur qui communique avec la sortie. L'eau est séparée du côté interne du média filtrant par utilisation d'un agencement de séparation d'eau comprenant deux toiles hydrophobes d'un genre différent, les gouttes tombant sur la chambre inférieure.

Le fait d'utiliser dans un tel filtre deux toiles hydrophobes d'un genre différent et complémentaires, successivement traversées par l'écoulement de carburant, permet d'améliorer l'efficacité de séparation d'eau. De plus on peut séparer l'eau du carburant déjà filtré, la collecte de cette eau étant réalisée en aval de la filtration, du côté de la zone de carburant propre.

Un inconvénient de ce type d'agencement est que la mise en place de deux toiles hydrophobes, ici par assemblage avec des flasques de l'élément filtrant, n'est pas aisée. Par ailleurs, le fait de doubler le nombre de toiles hydrophobes génère des pertes de charge plus importantes. Plus généralement, il existe un besoin pour des solutions compactes et/ou simples à mettre en oeuvre qui permettent d'atteindre un haut niveau de séparation d'eau.

Il est connu par ailleurs par le document DE 30 46 179 A1 un filtre non séparateur d'eau avec une configuration compacte de l'élément filtrant qui retient les particules. Un tel filtre avec un élément filtrant proche du fond et qui vise à faire circuler une partie du carburant le long du fond du boîtier peut cependant générer des pertes de charge en raison d'une répartition inégale entre le flux côté externe et le flux côté interne de l'élément filtrant.

Le document US 2 580 209 décrit également une configuration compacte d'un élément filtrant qui retient les particules solides dans un filtre non séparateur d'eau.

### DESCRIPTION GENERALE DE L'INVENTION

La présente invention vise à pallier un ou plusieurs des inconvénients susmentionnés, tout en conservant l'avantage d'une séparation d'eau efficace.

A cet effet, il est proposé selon l'invention un agencement de séparation d'eau du genre précité caractérisé en ce que l'agencement a une forme externe généralement tubulaire et s'étend entre une première extrémité axiale et une deuxième extrémité axiale qui présente une sortie destinée à être connectée de façon étanche à un conduit du boîtier, l'agencement de séparation d'eau comprenant :
- au moins un élément répartiteur situé du côté de la première extrémité axiale et reliant de manière étanche un bord du premier élément séparateur d'eau à un bord du deuxième élément séparateur d'eau ; et
- une zone collectrice s'étendant parallèlement à l'axe longitudinal entre ledit élément répartiteur et la sortie, la zone collectrice communiquant avec la sortie, les premier et deuxième éléments séparateurs d'eau étant en regard l'un de l'autre, ladite zone collectrice étant délimitée entre une première face latérale appartenant au premier élément séparateur d'eau et une deuxième face latérale appartenant au deuxième élément séparateur d'eau, de façon à recevoir un premier écoulement de carburant traversant le premier élément séparateur d'eau et un deuxième écoulement de carburant traversant le deuxième élément séparateur d'eau.

Grâce à cet agencement de séparation, un écoulement de carburant à destination de la sortie peut être séparé en deux écoulements qui divergent à partir de l'élément répartiteur. Le premier élément séparateur d'eau est traversé sélectivement par un premier des deux écoulements et le deuxième élément séparateur d'eau est traversé sélectivement par un deuxième des deux écoulements. Comme l'accès à la zone collectrice par la première extrémité axiale est obturé par le répartiteur (liaison étanche entre les deux bords des éléments séparateurs d'eau), on comprend que l'écoulement de carburant diverge avant de converger vers la sortie via les éléments séparateurs d'eau (qui laissent passer le carburant) et la zone collectrice.

Le fait de disposer deux éléments séparateurs en regard l'un de l'autre avec une zone collectrice intercalaire permet de limiter l'encombrement de l'agencement de séparation et d'obtenir une séparation efficace avec de grands débits de carburant.

Dans divers modes de réalisation de l'agencement de séparation selon l'invention, on peut éventuellement avoir recours en outre à l'une et/ou à l'autre des dispositions suivantes :
- les premier et deuxième éléments séparateurs d'eau comprennent chacun une toile hydrophobe (il peut s'agir de toiles analogues et présentant les mêmes caractéristiques de séparation d'eau).
- le premier élément séparateur d'eau s'étend de façon annulaire autour de l'axe longitudinal en définissant un passage axial interne, la première extrémité axiale présentant une entrée, de préférence axiale, pour l'accès au passage axial interne, l'élément répartiteur étant formé autour de ladite entrée (avec cette disposition, on optimise la surface de contact du premier élément séparateur).
- les premier et deuxième éléments séparateurs d'eau ont une forme générale annulaire et sont agencés de façon coaxiale autour de l'axe longitudinal, les première et deuxième extrémités axiales reliant l'un à l'autre lesdits premier et deuxième éléments séparateurs d'eau de façon à former un module de séparation d'eau, l'élément répartiteur faisant partie des moyens de support (l'aspect modulaire de l'agencement de séparation est avantageux pour faciliter son assemblage dans des filtres à carburant de différentes conceptions).
- le deuxième élément séparateur entoure le premier élément séparateur d'eau de sorte que la zone collectrice est au moins en partie de forme annulaire, le deuxième élément séparateur d'eau étant plus long que le premier élément séparateur qui est distant de la deuxième extrémité axiale ; de préférence la sortie est formée axialement dans la deuxième extrémité axiale, la zone collectrice ayant à proximité de la deuxième extrémité axiale une section transversale qui coupe l'axe longitudinal (ainsi, la zone collectrice présente une géométrie qui favorise une continuité dans la vitesse d'écoulement à proximité de la sortie de l'agencement).

Par ailleurs, l'invention concerne également un ensemble de séparation d'eau pour circuit de circulation de carburant d'un moteur à combustion interne, comprenant :
- un boîtier externe avec un fond, une admission de carburant et un conduit de sortie agencé à distance du fond, une chambre inférieure délimitée par ledit fond (et dans laquelle de l'eau séparée peut s'accumuler), et
- l'agencement de séparation d'eau selon l'invention, la sortie formée dans la deuxième extrémité axiale de cet agencement étant connectée de manière étanche au conduit de sortie.

Le fait de disposer le répartiteur à l'opposé de la sortie et en travers par rapport à l'axe longitudinal permet d'obtenir des écoulements en biais (par rapport à l'axe longitudinal), ce qui est favorable à l'obtention d'une vitesse découlement qui varie peu pendant la traversée de l'agencement de séparation d'eau. Ce type d'écoulement est également plus favorable à une séparation efficace de l'eau.

Typiquement, le conduit de sortie du boîtier est dans une partie supérieure de l'ensemble et la première extrémité axiale de l'agencement de séparation d'eau se situe à proximité du fond du boîtier. Ainsi l'écoulement est globalement ascendant dans l'agencement, ce qui favorise la séparation de l'eau.

Selon une particularité, le premier élément séparateur d'eau s'étend de façon annulaire autour de l'axe longitudinal en définissant un passage axial interne pour ledit premier écoulement, la première extrémité axiale présentant une entrée, de préférence axiale, pour l'accès au passage axial interne, l'élément répartiteur étant formé autour de l'entrée de la première extrémité axiale, l'agencement de filtration étant au moins en partie enveloppé par une conduite tubulaire du boîtier, de façon à délimiter autour du deuxième élément séparateur d'eau un passage externe pour ledit deuxième écoulement. Avec cette disposition, on comprend que le courant de carburant dans la zone collectrice a une direction globale parallèle à l'axe longitudinal et les passages respectivement interne et externe peuvent être dimensionnés pour diviser l'écoulement de carburant en deux écoulements de débit sensiblement identique.

L'invention concerne également un filtre à carburant séparateur d'eau, comportant un ensemble de séparation d'eau selon l'invention, le boîtier délimitant un volume intérieur et comprenant une entrée de carburant brut formant l'admission, le conduit de sortie faisant partie d'une sortie de carburant filtré, le filtre comprenant en outre :
- un élément filtrant disposé dans le volume intérieur, l'élément filtrant comportant une extrémité supérieure, une extrémité inférieure et un média filtrant s'étendant entre l'extrémité supérieure et l'extrémité inférieure, l'élément filtrant délimitant une zone amont communiquant avec l'entrée de carburant brut et une zone aval.

Dans divers modes de réalisation du filtre selon l'invention, on peut éventuellement avoir recours en outre à l'une et/ou à l'autre des dispositions suivantes :
- l'agencement de séparation d'eau est placé dans la zone aval et la première extrémité axiale s'étend à proximité de la chambre inférieure (avec cette disposition, et sachant que l'élément filtrant est préférentiellement agencé à distance du fond où l'eau est collecté, on comprend alors que le fond du boîtier forme, seul ou en combinaison avec un ou plusieurs déflecteurs, un composant de routage qui renvoie le courant de carburant filtré par l'élément filtrant vers une zone déterminée située plus en haut, où se trouve l'agencement de séparation d'eau).
- le média filtrant est sensiblement annulaire et s'étend autour d'un axe central entre l'extrémité supérieure et l'extrémité inférieure de l'élément filtrant, l'axe longitudinal étant sensiblement parallèle à l'axe central ; de préférence, l'espace intérieur délimité par une face interne du média filtrant loge l'un au moins parmi le premier élément séparateur d'eau et le deuxième élément séparateur d'eau (ainsi l'encombrement dû à l'agencement de séparation peut être minimisé).
- un déflecteur est agencé dans la zone aval à distance du fond et définit un plan transversal par rapport à l'axe longitudinal, le déflecteur étant placé à l'aplomb de l'espace intérieur ; ainsi, le déflecteur permet d'une part de protéger des turbulences la zone de décantation d'eau formée dans le bas de la chambre inférieure, et d'autre part de dévier le courant de carburant sortant de l'élément filtrant pour le guider vers l'espace intérieur, où peut être logé l'agencement de séparation d'eau (ou avec déviation du courant, dans une variante, vers un compartiment supérieur recevant seulement l'agencement de séparation d'eau).
- les bords des premier et deuxième éléments séparateurs d'eau sont agencés à un même niveau de hauteur dans un compartiment inférieur du volume intérieur, l'élément filtrant étant de préférence logé dans un compartiment supérieur du volume intérieur (ainsi, on évite de favoriser un écoulement plutôt qu'un autre, en particulier lorsque le fond du boîtier guide le courant de manière ascendante).

Par ailleurs, l'invention concerne également une utilisation d'un premier élément séparateur d'eau et d'un deuxième élément séparateur d'eau, dans un filtre à carburant du type comprenant un élément filtrant et un boîtier externe logeant l'élément filtrant et qui présente une entrée de carburant brut et une sortie de carburant filtré, dans laquelle :
- on regroupe le premier élément séparateur d'eau et le deuxième élément séparateur d'eau dans un agencement de filtration permettant de séparer l'eau à l'intérieur du boîtier dans une zone déterminée qui est de préférence en aval par rapport à l'élément filtrant,
- on forme dans la zone déterminée deux passage distincts de façon à diviser un écoulement de carburant dans la zone déterminée en deux écoulements et on fait communiquer les deux passages avec une même zone collectrice qui communique avec la sortie de carburant filtré, la zone collectrice étant délimitée entre les premier et deuxième éléments séparateurs d'eau qui sont placés en regard l'un de l'autre, l'un des deux passages étant séparé de la zone collectrice par le premier élément séparateur d'eau et l'autre des deux passages étant séparé de la zone collectrice par le deuxième élément séparateur d'eau,
ce grâce à quoi les deux écoulements peuvent être routés dans la zone collectrice, l'écoulement associé au premier passage étant filtré par le premier élément séparateur d'eau et l'écoulement associé au deuxième passage étant filtré par le deuxième élément séparateur d'eau.

### BREVE DESCRIPTION DES DESSINS

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en coupe illustrant un filtre selon un premier mode de réalisation préféré de l'invention ;
- la figure 2 est une vue en coupe illustrant un module à deux éléments séparateurs d'eau utilisé dans le filtre de la figure 1 ;
- la figure 3 montre une vue de dessous d'un déflecteur utilisé dans le filtre de la figure 1 ;
- la figure 4 illustre la circulation du carburant dans une vue en coupe identique à celle de la figure 1 ; et
- la figure 5 est une vue en coupe illustrant un filtre selon un deuxième mode de réalisation préféré de l'invention.

### DESCRIPTION DES MODES DE REALISATION PREFERES DE L'INVENTION

Sur les différentes figures, les mêmes références désignent des éléments identiques ou similaires.

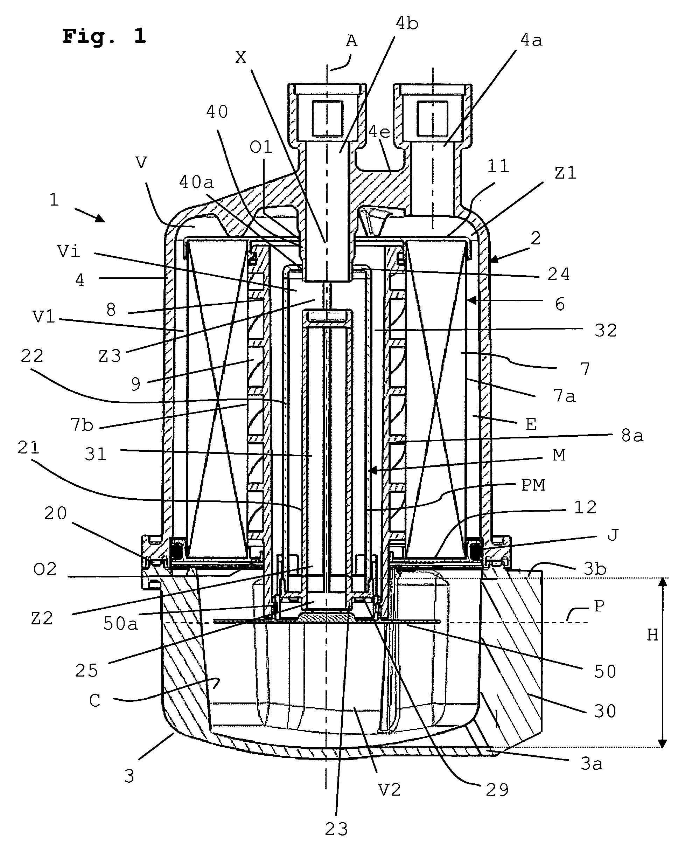

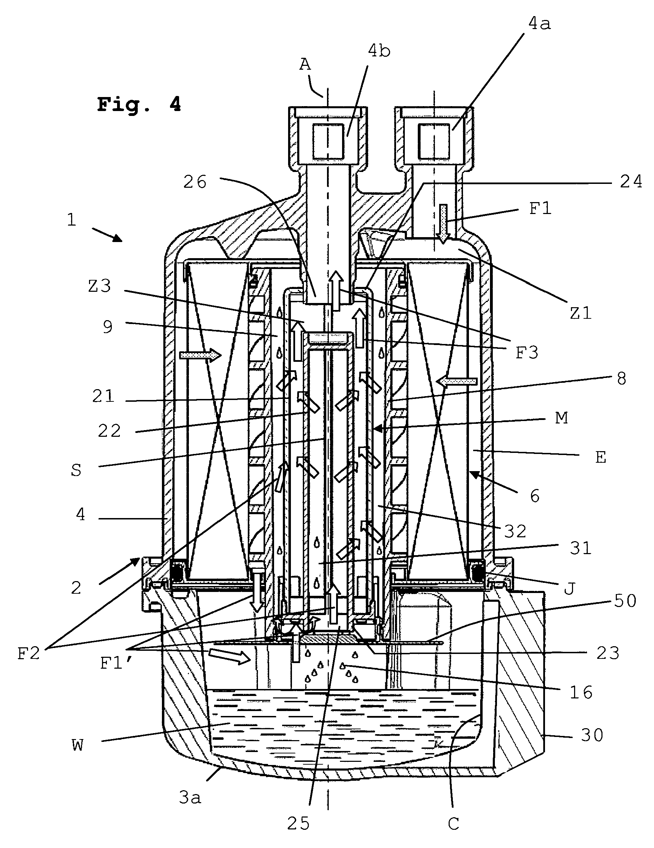

Les figures 1 et 4 représentent un premier mode de réalisation préféré du filtre à liquide (gazole ou carburant similaire) avec séparateur d'eau.

Le filtre 1 comprend un boîtier 2 qui présente une paroi supérieure et une paroi inférieure. Le boîtier 2 est raccordable de façon interchangeable à des conduites d'un système d'alimentation en carburant d'un véhicule à moteur à combustion. Comme cela est visible sur la figure 1, une paroi externe latérale, ici globalement verticale, s'étend depuis la paroi supérieure jusqu'à une paroi inférieure formant le fond 3a du boîtier 2.

Dans cet exemple, le boîtier 2 du filtre 1 peut présenter une forme sensiblement cylindrique de révolution autour d'un axe central. Dans l'exemple non limitatif des figures, la paroi inférieure du boîtier 2 est définie ou fait partie d'une cuve 3 ou pièce d'obturation similaire en métal ou en plastique. La paroi supérieure est formée par une tête de filtre 4 (ici formée d'un bloc) qui est reliée de manière étanche à la cuve 3. Comme illustré sur la figure 1, cette tête de filtre 4 présente une entrée de carburant 4a ou autre liquide comparable à filtrer ainsi qu'une sortie de carburant 4b ou autre liquide filtré pour permettre la circulation et la filtration du carburant à l'intérieur du filtre 1.

Cette cuve 3 est ici fixée de manière étanche au reste du boîtier 2 dans une zone de connexion 20 sensiblement annulaire, par une soudure (ou fixation permanente similaire). D'autres modes de fixation sont permis. Ainsi, une fixation amovible est par exemple utilisée (avec un filetage ou connexion équivalente) lorsque l'on souhaite pouvoir changer l'élément filtrant 6 placé dans le volume intérieur V délimité par le boîtier 2.

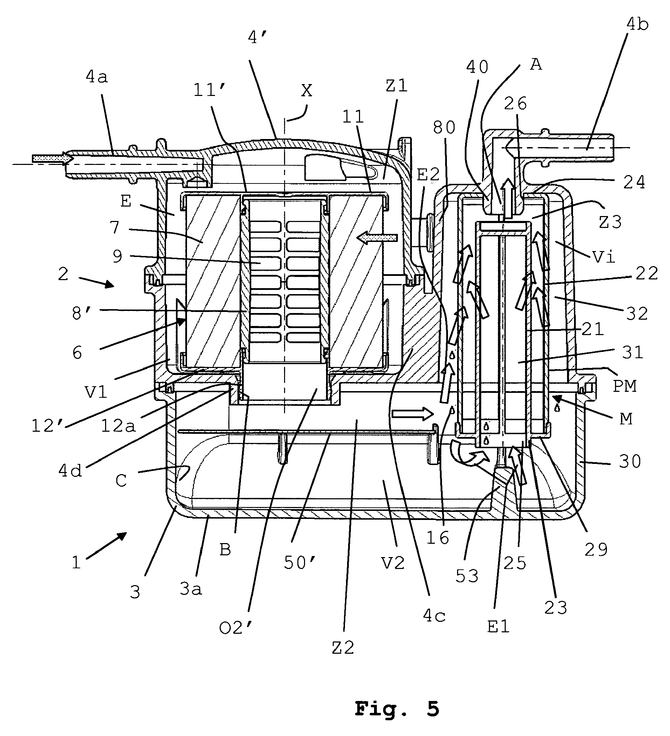

Comme cela est visible sur les figures 1 et 4 (voir figure 5 également), la cuve 3 peut être réalisée en matière plastique rigide et présente un fond 3a à partir duquel s'étend vers le haut une paroi latérale annulaire 30. Cette cuve 3 forme un réservoir d'accumulation d'eau (la hauteur de la cuve 3 est par exemple supérieure à 10mm et de préférence dépasse 15 ou 20mm). La tête de filtre 4, qui forme l'autre composant du boîtier 2, est fixée ici sur l'extrémité supérieure de la paroi latérale 30. La tête de filtre 4 définit dans cet exemple tout ou partie d'une chambre pour loger l'élément filtrant 6 du filtre 1.

Le volume intérieur V du boîtier 2 se décompose en un compartiment supérieur V1, situé au-dessus de l'extrémité 3b de la cuve 3 et permettant de loger l'élément filtrant 6, et un compartiment inférieur V2 délimité par la cuve 3.

Selon une variante, la tête de filtre 4 peut s'étendre essentiellement au-dessus de l'élément filtrant 6. Dans ce cas, une paroi latérale peut prolonger axialement l'extrémité supérieure 3b de la cuve 3.

L'entrée 4a de carburant et la sortie 4b de carburant sont ici situées dans une partie supérieure 4e de la tête de filtre 4, à distance axiale de l'extrémité supérieure 3b de la cuve 3.

L'élément filtrant 6 est ici de forme annulaire. L'élément filtrant 6 présente un média filtrant 7, un tube interne 8, un premier flasque appelé dans ce qui suit flasque supérieur 11, un deuxième flasque appelé dans ce qui suit flasque inférieur 12. Dans des variantes de réalisation, au moins le flasque supérieur 11 peut être considéré comme optionnel et l'élément filtrant 6 est dans ce cas fixé différemment à la tête de filtre 4 ou composant similaire du boîtier 2. Le tube interne 8 rigidifie l'élément filtrant 6. Le tube interne 8 s'étend ici entre le flasque supérieur 11 et le flasque inférieur 12. Le tube interne 8 peut éventuellement permettre de canaliser du carburant, en le faisant descendre jusqu'au flasque inférieur 12 ou extrémité inférieure similaire.

Dans sa position fonctionnelle visible sur les figures 1 et 4, l'élément filtrant 6 partitionne le volume intérieur V entre une zone Z1 en amont du média filtrant 7 communiquant avec l'entrée 4a et une zone Z2 en aval du média filtrant 7 communiquant avec la sortie 4b. Le flasque supérieur 11 présente une ouverture centrale O1 qui permet le passage du carburant filtré vers la sortie 4b. De façon connue en soi, le média filtrant 7 permet de retenir des impuretés (typiquement des particules solides) contenues dans le carburant brut et peut laisser passer l'eau.

En référence aux figures 1 et 4, le média filtrant 7 s'étend de préférence de façon annulaire autour d'un axe central X qui peut être confondu avec l'axe central du boîtier 2 ou éventuellement être parallèle à celui-ci dans des variantes de réalisation. Dans l'exemple des figures 1 et 4, le média filtrant 7 s'étend autour de cet axe central X entre une extrémité supérieure et une extrémité inférieure, au dessus de la zone de connexion 20 entre la cuve 3 et le reste du boîtier 2. L'extrémité supérieure du média filtrant 7 est fixée de manière étanche au flasque supérieur 11 tandis que l'extrémité inférieure du média filtrant 7 est fixée de manière étanche au flasque inférieur 12.

Le média filtrant 7 présente une face externe 7a qui délimite avec le boîtier 2 un espace annulaire externe E. Le média filtrant 7 présente aussi une face interne 7b qui délimite un espace intérieur 9 creux. Le média filtrant 7 retient les impuretés notamment solides et a optionnellement une fonction de coalesceur, ce qui peut faciliter la séparation d'eau. Le média filtrant 7 peut être d'un genre connu en soi et ne sera pas davantage décrit ici.

Deux éléments séparateurs d'eau 21 et 22, par exemple deux toiles hydrophobes ou autres éléments analogues pour la séparation d'eau, sont placés dans la zone Z2 en aval. La cuve 3 délimite une chambre inférieure C dans laquelle l'eau séparée par les éléments séparateurs d'eau 21 et 22 peut s'accumuler. Les deux éléments séparateurs d'eau 21 et 22 sont regroupés dans un agencement de séparation d'eau, ici sous la forme d'un module M qui s'étend entre une première extrémité axiale 23 inférieure (distante de la sortie 4b) située dans le compartiment inférieur V2 et une deuxième extrémité axiale 24 supérieure située dans le compartiment supérieur V1, à proximité de la sortie 4b. Plus généralement, on comprend que l'agencement de séparation d'eau est distinct du média filtrant 7 de l'élément filtrant 6 et qu'il peut être placé dans le boîtier 2 de façon à ce qu'il existe une voie intermédiaire de circulation entre l'une des faces 7a, 7b du média filtrant 7 et les éléments séparateurs d'eau 21, 22. Cette voie intermédiaire de circulation comprend par exemple un tronçon commun qui passe au travers d'un flasque 12 ou 12' de l'élément filtrant 6.

En référence aux figures 1, 2 et 4, le deuxième élément séparateur d'eau 22 définit une face externe latérale PM du module M. L'extrémité inférieure 23 présente une entrée 25 de module avec au moins une ouverture d'accès à un premier passage 31, formé intérieurement dans le module M. Ici, il est prévu une ouverture axiale avec un premier passage 31 axial mais d'autres formes de réalisation sont permises pour définir l'accès au premier passage 31. Le premier élément séparateur d'eau 21 présente une face intérieure, ici annulaire, formant une face interne latérale du module M et qui délimite le premier passage 31 interne. Dans la zone en aval Z2, un deuxième passage 32, distinct du premier chemin de passage 31, s'étend autour du deuxième élément séparateur d'eau 22.

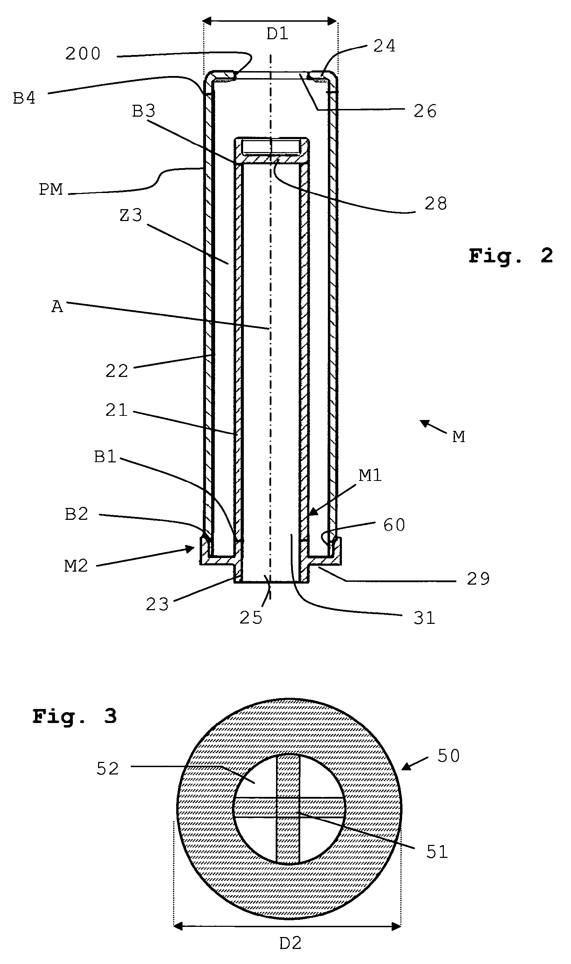

Comme cela est bien visible sur les figures 2 et 4, une zone collectrice Z3, vers laquelle convergent les deux écoulements respectivement associés au premier passage 31 et au deuxième passage 32, est formée entre le premier élément séparateur d'eau 21 et le deuxième élément séparateur d'eau 22 (ici entre les deux passages 31, 32). Dans cet exemple non limitatif, la zone collectrice Z3 s'étend en partie de façon annulaire à l'intérieur du module M séparateur d'eau. La zone collectrice Z3 débouche à l'extérieur du module M au travers d'une sortie 26 de module, ici définie par une ouverture axiale.

Bien que cet exemple prévoit de placer le module M dans la zone aval Z2 et à proximité de la sortie 4b de carburant filtré, on comprend plus généralement que les deux éléments séparateurs d'eau 21 et 22 peuvent être placés dans toute zone déterminée d'un boîtier 2 traversé par un écoulement de carburant, ces éléments séparateurs d'eau 21 et 22 étant en regard l'un de l'autre pour faire converger l'écoulement vers une zone collectrice Z3 qui communique avec une sortie du boîtier 2. Ainsi, l'élément filtrant 6 peut éventuellement être placé dans un boîtier distinct lorsque la problématique d'encombrement permet une telle configuration.

Dans la forme de réalisation des figures 1, 2 et 4, le module M a une forme externe tubulaire, de préférence cylindrique. L'extrémité inférieure 23 présente ici un élément répartiteur 29 annulaire qui s'étend entre le premier élément séparateur d'eau 21 et le deuxième élément séparateur d'eau 22 pour empêcher l'accès à la zone collectrice Z3 par le bas. L'élément répartiteur 29 forme une barrière axiale empêchant une remontée de l'eau W contenue dans le fond 3a de la cuve vers la zone collectrice Z3 lors d'un à-coup.

On comprend que l'élément répartiteur 29 annulaire permet aussi d'écarter entre eux les éléments séparateurs d'eau 21 et 22. Une structure S (figure 4) peut être prévue pour rigidifier l'un et/ou l'autre des premier et deuxième éléments séparateurs d'eau 21, 22. Un élément de support 28 du premier élément séparateur d'eau 21 peut aussi être prévu à l'opposé de l'entrée 25 de module. Ici, cet élément de support 28 est relié de manière étanche à l'extrémité annulaire supérieure du premier élément séparateur d'eau 21 (formé par exemple d'une toile hydrophobe). Une grille peut aussi faire éventuellement partie des éléments séparateurs d'eau 21 et 22 ou être montée de façon complémentaire.

En référence à la figure 2, le module M présente un volume réduit, avec un diamètre D1 inférieur à la plus petite dimension de l'espace intérieur 9 creux, de sorte qu'il peut être positionné dans cet espace intérieur 9, comme illustré sur les figures 1 et 4. On peut voir sur la figure 1, dans la position de montage de l'élément filtrant 6, que le bord interne du flasque supérieur 11 est en prise avec un organe mâle tubulaire formant un conduit de connexion 40 interne de la tête de filtre 4. Ce conduit de connexion 40 s'étend autour de l'axe central X et forme ici un conduit de sortie. Une face externe 40a du conduit de connexion 40 est en contact étanche annulaire avec le bord interne du flasque supérieur 11. Cette face externe 40a se prolonge vers le bas pour venir en outre en contact étanche avec une lèvre d'étanchéité 200 annulaire formée dans la deuxième extrémité axiale 24 du module M. Ainsi, une même paroi du conduit de connexion 40 permet dans ce cas d'isoler la zone amont Z1 de la zone aval Z2 (via le contact d'étanchéité avec l'extrémité supérieure de l'élément filtrant 6) et d'isoler la zone collectrice Z3 du deuxième passage 32.

Dans l'exemple non limitatif des figures 1 et 4, le deuxième passage 32 correspond à un espace annulaire délimité extérieurement par le tube interne 8. Ce tube interne 8 s'étend autour du module M et présente une longueur supérieure à celle du module M pour pouvoir s'étendre longitudinalement entre le flasque supérieur 11 et un déflecteur 50 situé en dessous du module M. Le déflecteur 50 est ici supporté par le tube interne 8. En variante, le déflecteur 50 peut être supporté par des organes de support de la cuve 3 ou tout autre genre de support adapté. Le déflecteur 50 est ainsi agencé dans la zone aval Z2 à distance du fond 3a et empêche le courant sortant de l'élément filtrant 6 de générer des turbulences importantes dans la zone de décantation d'eau formée sur le fond 3a. Ici, on peut voir sur les figures 1 et 4 que le courant peut sortir de l'élément filtrant 6 au travers d'une ou plusieurs ouvertures 02 du flasque inférieur 12, à proximité du bord interne annulaire du flasque inférieur 12 et à proximité de la face externe du tube interne 8. Autrement dit, le carburant filtré par le média filtrant 7 peut quitter l'espace intérieur 9 et rejoindre le compartiment inférieur V2 via ces ouvertures 02, par exemple en étant guidé par des ailettes 8a (ici en forme d'hélice) formées sur la face externe du tube interne 8. Les trois flèches F1' sur la figure 4 illustrent l'écoulement de carburant entre les ouvertures 02 et l'extrémité inférieure 23 du module M.

En référence aux figures 1 et 3, le déflecteur 50 peut présenter une forme généralement plane à l'exception de pattes 50a ou d'une projection annulaire faisant saillie depuis la face supérieure du déflecteur 50. Ces pattes 50a permettent un clipsage du déflecteur 50 sur l'extrémité inférieure du tube interne 8 (en coopérant avec des reliefs internes de ce tube interne 8). Le déflecteur 50 peut bien entendu se présenter sous différentes formes, monobloc ou en plusieurs pièces. Alternativement, on peut aussi utiliser un tube interne 8 qui présente une extrémité inférieure intégrant une forme de déflecteur (par exemple similaire à la forme du déflecteur 50 qui est une pièce séparée dans le premier mode de réalisation).

Dans l'exemple non limitatif des figures 1, 3 et 4, le déflecteur 50 définit un plan P transversal par rapport à l'axe central X et à l'axe longitudinal A et est placé à l'aplomb de l'espace intérieur 9 en présentant un diamètre externe D2 supérieur au diamètre de l'espace intérieur 9 creux. On peut voir sur la figure 3 que le déflecteur 50 présente une forme de disque avec un croisillon 51 central qui limite la section des ouvertures 52 pour le passage du carburant filtré dans le sens ascendant. Ce croisillon 51 (ou autre entretoise similaire) et ces ouvertures 52 permettent de limiter le courant de carburant dans la direction longitudinale, de sorte que l'écoulement de carburant en direction du premier passage 31 interne via l'entrée 25 du module M n'excède pas significativement l'écoulement de carburant dévié par le répartiteur 29 vers le deuxième passage 32 externe.

Dans le filtre 1 tel qu'illustré sur les figures 1 et 4, on comprend que l'élément filtrant 6 peut être balayé dans la direction radiale. Cet élément filtrant 6 est alors orienté en position de montage suivant un axe vertical du véhicule, ici sensiblement confondu avec l'axe longitudinal A du module M. En référence à la figure 4, les flèches F1, F1', F2 et F3 montrent le sens de circulation du carburant dans le filtre 1, successivement au travers du média filtrant 7 (dans le compartiment supérieur V1) avant un changement de direction vers la ou les ouverture 02 du flasque inférieur 12, puis avec une déviation au niveau du compartiment inférieur V2 pour réorienter l'écoulement vers le module M. La zone en amont Z1 par rapport au média filtrant 7 comprend en particulier une zone annulaire située au dessus de l'élément filtrant 6, adjacente à l'entrée 4a, et un espace annulaire E qui fait le tour du média filtrant 7. Le carburant brut situé dans cet espace annulaire E traverse le média filtrant 7 pour atteindre l'espace intérieur 9, du côté de la zone en aval Z2, ici autour du tube interne 8.

Comme illustré par les flèches F2 sur la figure 4, les premiers et deuxième passages 31, 32 acheminent l'écoulement de carburant vers la zone collectrice Z3 de manière différente, le premier passage 31 guidant un premier écoulement de carburant vers la zone collectrice Z3 via le premier élément séparateur d'eau 21, le deuxième passage 32 guidant un deuxième écoulement de carburant vers la zone collectrice Z3 via le deuxième élément séparateur d'eau 22. Bien que cet exemple montre un module M agencé dans l'espace intérieur 9, on comprend que le module M peut en variante être placé dans le compartiment inférieur V2 lorsque les dimensions de la cuve 3 le permettent. Dans ce cas, il peut être prévu un tube additionnel (non représenté) qui fait la liaison étanche entre la sortie 26 du module M et le conduit de connexion 40, en traversant l'espace intérieur 9. Un tel tube additionnel peut faire éventuellement partie de la deuxième extrémité axiale 24 et présente dans ce cas une lèvre d'étanchéité 200 dans sa partie supérieure.

La séparation d'eau se fait ici sur la face interne du premier élément séparateur d'eau 21 et sur la face externe du deuxième élément séparateur d'eau 22. Ainsi, le premier chemin 31 et respectivement le deuxième chemin 32, qui s'étendent ici verticalement entre les deux extrémités axiales 23 et 24, permettent aux gouttelettes d'eau 16 de tomber par gravité dans le compartiment inférieur V2. Dans ce premier mode de réalisation, les ouvertures 52 permettent à ces gouttelettes d'eau 16 de passer au travers du déflecteur 50. La masse d'eau W visible sur la figure 4, accumulée au cours du temps dans la chambre inférieure C, peut bien entendu être évacuée en utilisant une vis de purge montée dans un conduit de purge (non représenté) ou autre composant mobile analogue.

En référence à présent à la figure 2, le module M présente une première extrémité axiale 23 rigide réalisée d'une pièce et qui incorpore l'élément répartiteur 29 autour de l'entrée 25 de module. L'élément répartiteur 29 a ici une forme annulaire et relie de manière étanche un bord B1 annulaire inférieur (bord amont par rapport au sens de circulation de carburant) du premier élément séparateur d'eau 21 à un bord B2 annulaire inférieur (bord amont par rapport au sens de circulation de carburant) du deuxième élément séparateur d'eau 22. Le module M comprend deux composants tubulaires M1, M2 agencés de façon coaxiale autour de l'axe longitudinal A. Le premier composant M1 comprend ici une toile hydrophobe maintenue pas son bord inférieur B1 à un flasque qui permet de clipser un support 60, typiquement en plastique, appartenant au deuxième composant M2. Le flasque est également en plastique et définit ici la première extrémité axiale 23 du module M. L'élément de support 28 permet de supporter et maintenir le bord B3 annulaire supérieur du premier composant M1 et dévie l'écoulement de carburant du premier passage 31 interne dans des directions radiales. Le deuxième composant M2 comprend une toile hydrophobe légèrement plus longue qui s'étend entre un bord B2 annulaire inférieur relié de manière étanche au support 60 et un bord B4 annulaire supérieur relié de manière étanche à une pièce annulaire typiquement en plastique qui forme la deuxième extrémité axiale 24 du module M.

Avec une forme générale tubulaire des toiles hydrophobes, la zone collectrice Z3 présente une section annulaire uniforme à l'exception d'une extrémité proche débouchant sur la sortie 26 qui est ici axiale. A cette extrémité, la zone collectrice Z3 a une section transversale continue qui coupe l'axe longitudinal A. Cette configuration permet une transition entre des écoulements de carburant à forte composante radiale (écoulement au travers des toiles hydrophobes) et un écoulement à forte composante axiale au niveau de la sortie 26 du module M de séparation d'eau.

En référence aux figures 1 et 2, les bords B1 et B2 ou extrémités analogues des éléments séparateurs d'eau 21, 22 sont, dans cet exemple, agencés à un même niveau de hauteur H dans le compartiment inférieur V2. C'est seulement à partir de ce niveau de hauteur H des bords B1 et B2 que le carburant peut pénétrer dans la zone collectrice Z3. On comprend ainsi que l'écoulement de carburant filtré qui rejoint le volume interne Vi défini par le tube interne 8 peut se répartir de part et d'autre de l'élément répartiteur 29 sans qu'il y ait un chemin préférentiel. Le tube interne 8 enveloppe le module M de façon à délimiter autour du deuxième élément séparateur d'eau 22 une section annulaire pour le deuxième passage 32 externe qui permet d'écouler un débit de carburant comparable et de préférence sensiblement identique au débit de carburant entrant dans le premier passage 31 interne via l'entrée 25 de module.

Le deuxième mode de réalisation va à présent être décrit en référence à la figure 5.

Le filtre 1 montré sur la figure 5 présente une tête de filtre 4' ici composée de deux blocs dont l'un présente l'entrée 4a de carburant brut et l'autre présente la sortie 4b de carburant filtré. Une paroi de séparation 4c sépare le compartiment supérieur V1 logeant l'élément filtrant 6 d'un compartiment supérieur additionnel pour le module M. La cuve 3 présente un fond 3a qui s'étend à la fois sous le compartiment supérieur V1 et sous le compartiment additionnel. Dans cet exemple, le module M de séparation d'eau est décalé latéralement par rapport à l'élément filtrant 6. La cuve 3 pourvue du déflecteur 50 situé sous l'élément filtrant 6 forme un composant de routage de l'écoulement de carburant vers le module M de séparation d'eau ou autre agencement similaire à deux éléments séparateur d'eau 21, 22 en regard l'un de l'autre et délimitant entre eux une zone collectrice Z3.

Il faut ici noter que ce type de tête de filtre 4' peut additionnellement comporter une entrée et une sortie de recirculation formés à proximité de l'entrée 4a de carburant brut. Un couvercle 4' amovible, par exemple fileté à son extrémité inférieure, peut délimiter la partie supérieure du compartiment supérieur V1. Dans ce deuxième mode de réalisation, on peut voir que le flasque supérieur 11' peut être dépourvu d'ouverture. Plus généralement on comprend que la position de la sortie 4b peut être déplacée selon la configuration souhaitée et les contraintes d'encombrement.

Le chemin de circulation du carburant au travers de l'élément filtrant 6 est semblable à ce qui est réalisé dans le premier mode de réalisation, avec une filtration de type centripète depuis l'espace annulaire et écoulement descendant du carburant dans l'espace intérieur 9. Une ouverture centrale O2' du flasque inférieur 12', qui est délimitée par un col 12a, permet de faire passer le carburant filtré du compartiment supérieur V1 au compartiment inférieur V2. La face externe du col 12a peut présenter un bourrelet saillant B qui est en contact radial étanche avec un col 4d ou conduit analogue formé dans un élément de support du boîtier 2. Cet élément de support qui permet de fixer l'élément filtrant 6 de manière amovible sépare ici les compartiments supérieur et inférieur V1, V2. Un avantage de ce type de contact radial est de supprimer le joint J (voir figure 1) utilisé dans le premier mode de réalisation pour l'obtention de l'étanchéité entre l'espace annulaire E de la zone amont Z1 et la zone aval Z2. Le boîtier 2 et les flasques 11', 12' peuvent être réalisés en matière plastique.

Toujours en référence à la figure 5, le déflecteur 50' est ici supporté par des organes de support de la cuve 3 et décalé radialement par rapport au module M. Une projection interne 53 qui fait saillie depuis le fond 3a forme une paroi de déviation verticale à l'aplomb du module M. Cette projection interne 53 permet de router le courant de carburant de façon ascendante. Le module M est ici identique à ce qui a été décrit en liaison avec le premier mode de réalisation et on comprend qu'il est simplement placé dans une position différente par rapport à l'élément filtrant 6. Le déflecteur 50' est ici agencé sensiblement à un même niveau de hauteur que le répartiteur 29 et définit un plan transversal de façon à protéger le bas du compartiment inférieur V2. La paroi de séparation 4c protège le volume interne Vi délimité par la conduite tubulaire 80. Le passage formé entre la paroi de séparation 4c et le déflecteur 50' permet d'acheminer le carburant de façon radiale par rapport à l'axe longitudinal A du module M.

Les flèches de la figure 5 montrent la circulation de carburant filtré dans la cuve 3. Entre une extrémité du déflecteur 50' proche du module M et le répartiteur 29, on peut considérer que l'écoulement de carburant se divise globalement en :
- un premier écoulement (flèches E1) qui descend sous la première extrémité axiale 23 du module M avant de remonter dans le premier passage 31 interne par l'effet de la déviation de la projection interne 53 ; et
- un deuxième écoulement (flèches E2) qui monte autour du module M, dans le deuxième passage 32 externe, ici de section annulaire.

Comme décrit en liaison avec le premier mode de réalisation, le premier écoulement rejoint la zone collectrice Z3 via le premier élément séparateur 21, tandis que le deuxième écoulement rejoint la zone collectrice Z3 via le deuxième élément séparateur 22. Le conduit de connexion 40 prolonge ici la conduite tubulaire 80 qui délimite le volume interne Vi. Dans ce cas, la localisation du volume interne Vi entièrement en dehors du compartiment supérieur V1 permet de changer l'élément filtrant 6 de façon indépendante du montage du module M.

En variante, le module M peut être remplacé par un agencement de filtration dans lequel les bords B1 et B2 des éléments séparateurs d'eau 21 et 22 sont à une grande distance l'un de l'autre et dans une configuration non coaxiale. Dans ce cas, un ou plusieurs éléments répartiteurs 29 et éventuellement des déflecteurs permettent de router l'écoulement de carburant le long de ces bords B1 et B2. Il faut également comprendre que la zone collectrice Z3 peut se présenter sous d'autres formes et les éléments séparateurs d'eau 21, 22 peuvent présenter une géométrie au moins en partie plane. La forme annulaire est cependant préférée en ce qu'elle réduit l'encombrement et permet d'utiliser un élément répartiteur 29 simple et de taille réduite.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que l'entrée de carburant brut 4a et la sortie de carburant filtré 4b soient ici prévues dans la paroi supérieure de la tête de filtre 4 ou 4', d'autres agencements peuvent être utilisés, par exemple avec une entrée et éventuellement une sortie formée(s) dans une paroi latérale, à distance du fond 3a. Plus généralement, les zones d'étanchéité entre l'élément filtrant 6 et la tête de filtre 4 ou 4' pour isoler la zone en amont Z1 par rapport à la zone en aval Z2 peuvent se présenter sous différentes formes.

Egalement, bien que l'espace intérieur creux 9 a été illustré comme étant délimité par une face interne cylindrique, on comprend que d'autres formes d'espace intérieur peuvent être utilisées, avec par exemple des conformations différentes du média filtrant 7.

## Revendications

1. Filtre à carburant (1) séparateur d'eau, destiné à être raccordé à un circuit de circulation de carburant d'un moteur à combustion interne, le filtre comportant :
- un boîtier (2) externe présentant un fond (3a), une admission de carburant et un conduit (40) de sortie agencé à distance dudit fond (3a), une chambre inférieure (C) de collecte d'eau délimitée par ledit fond (3a),
- un élément filtrant (6) logé dans le boîtier (2), et
- un agencement de séparation d'eau comprenant :
- un premier élément séparateur d'eau (21) ;
- un deuxième élément séparateur d'eau (22) ;
- des moyens de support permettant de maintenir espacés entre eux le premier élément séparateur d'eau (21) et le deuxième élément séparateur d'eau (22) ;
**caractérisé en ce que** l'agencement, distinct de l'élément filtrant (6), a une forme externe généralement tubulaire et s'étend à l'intérieur du boîtier (2) selon un axe longitudinal (A) entre une première extrémité axiale (23) et une deuxième extrémité axiale (24) qui présente une sortie (26) connectée de façon étanche au conduit (40) de sortie du boîtier (2), ledit agencement comprenant :
- au moins un élément répartiteur (29) situé du côté de la première extrémité axiale (23) et reliant de manière étanche un bord (B1) du premier élément séparateur d'eau à un bord (B2) du deuxième élément séparateur d'eau ; et
- une zone collectrice (Z3) s'étendant parallèlement à l'axe longitudinal (A) entre ledit élément répartiteur (29) et la sortie (26), la zone collectrice (Z3) communiquant avec la sortie (26), les premier et deuxième éléments séparateurs d'eau (21, 22) étant en regard l'un de l'autre, ladite zone collectrice (Z3) étant délimitée entre une première face latérale appartenant au premier élément séparateur d'eau (21) et une deuxième face latérale appartenant au deuxième élément séparateur d'eau (22), de façon à recevoir un premier écoulement de carburant traversant le premier élément séparateur d'eau (21) et un deuxième écoulement de carburant traversant le deuxième élément séparateur d'eau (22).

2. Filtre selon la revendication 1, dans lequel les premier et deuxième éléments séparateurs d'eau (21, 22) comprennent chacun une toile hydrophobe.

3. Filtre selon la revendication 1 ou 2, dans lequel le premier élément séparateur d'eau (21) s'étend de façon annulaire autour de l'axe longitudinal (A) en définissant un passage axial interne (31), la première extrémité axiale (23) présentant une entrée (25), de préférence axiale, pour l'accès au passage axial interne (31), ledit élément répartiteur (29) étant formé autour de ladite entrée (25).

4. Filtre selon la revendication 3, dans lequel l'élément filtrant (6) est entouré par une paroi latérale du boîtier (2) et l'agencement de séparation d'eau est au moins en partie enveloppé par une conduite tubulaire (8 ; 80) distincte de ladite paroi latérale, de façon à délimiter autour du deuxième élément séparateur d'eau (22) un deuxième passage (32) externe pour ledit deuxième écoulement.

5. Filtre selon l'une quelconque des revendications précédentes, dans lequel les premier et deuxième éléments séparateurs d'eau (21, 22) ont une forme générale annulaire et sont agencés de façon coaxiale autour de l'axe longitudinal (A), les première et deuxième extrémités axiales (23, 24) reliant l'un à l'autre lesdits premier et deuxième éléments séparateurs d'eau (21, 22) de façon à former un module de séparation d'eau (M), l'élément répartiteur (29) faisant partie des moyens de support.

6. Filtre selon l'une quelconque des revendications précédentes, dans lequel le deuxième élément séparateur (22) entoure le premier élément séparateur d'eau (21) de sorte que la zone collectrice (Z3) est au moins en partie de forme annulaire, le deuxième élément séparateur d'eau (22) étant plus long que le premier élément séparateur (21) qui est distant de la deuxième extrémité axiale (24).

7. Filtre selon la revendication 6, dans lequel la sortie (26) est formée axialement dans la deuxième extrémité axiale (24), la zone collectrice (Z3) ayant à proximité de la deuxième extrémité axiale une section transversale qui coupe l'axe longitudinal (A).

8. Filtre selon l'une quelconque des revendications précédentes, dans lequel le boîtier (2) comprend une entrée (4a) de carburant brut formant ladite admission, le conduit (40) de sortie faisant partie d'une sortie (4b) de carburant filtré, l'élément filtrant étant adapté pour purifier le carburant brut

9. Filtre selon l'une quelconque des revendications précédentes, dans lequel
l'élément filtrant (6) comporte une extrémité supérieure, une extrémité inférieure et un média filtrant (7) s'étendant entre l'extrémité supérieure et l'extrémité inférieure, l'élément filtrant (6) délimitant une zone amont (Z1) communiquant avec l'entrée (4a) de carburant brut et une zone aval (Z2).

10. Filtre selon la revendication 9, dans lequel l'agencement de séparation d'eau est placé dans la zone aval (Z2) et la première extrémité axiale (23) s'étend à proximité de la chambre inférieure (C).

11. Filtre selon la revendication 9 ou 10, dans lequel le média filtrant (7) est sensiblement annulaire et s'étend autour d'un axe central (X) entre l'extrémité supérieure et l'extrémité inférieure de l'élément filtrant (6), l'axe longitudinal (A) étant sensiblement parallèle à l'axe central (X).

12. Filtre selon la revendication 9 ou 10, comprenant un déflecteur (50 ; 50') agencé dans la zone aval (Z2) à distance du fond (3a) et définissant un plan (P) transversal par rapport à l'axe longitudinal (A), le média filtrant (7) ayant une face interne (7b) qui délimite un espace intérieur (9), le déflecteur (50 ; 50') étant placé à l'aplomb dudit espace intérieur (9).

13. Filtre selon la revendication 11 ou 12, dans lequel le média filtrant (7) a une face interne (7b) qui délimite un espace intérieur (9), l'un au moins parmi le premier élément séparateur d'eau (21) et le deuxième élément séparateur d'eau (22) s'étendant dans l'espace intérieur (9).

14. Filtre selon l'une quelconque des revendications 9 à 13, dans lequel lesdits bords (B1, B2) des premier et deuxième éléments séparateurs d'eau (21, 22) sont agencés à un même niveau de hauteur (H) dans un compartiment inférieur (V2) du volume intérieur (V), l'élément filtrant (6) étant de préférence logé dans un compartiment supérieur (V1) du volume intérieur (V).

15. Utilisation d'un premier élément séparateur d'eau (21) et d'un deuxième élément séparateur d'eau (22), dans un filtre à carburant (1) du type comprenant un élément filtrant (6) et un boîtier externe (2) logeant l'élément filtrant et qui présente une entrée (4a) de carburant brut et une sortie (4b) de carburant filtré,
dans laquelle on regroupe le premier élément séparateur d'eau (21) et le deuxième élément séparateur d'eau (22) dans un agencement de filtration permettant de séparer l'eau à l'intérieur du boîtier (2) dans une zone déterminée qui est de préférence en aval (Z2) par rapport à l'élément filtrant (6),
**caractérisée en ce qu'**on forme dans la zone déterminée deux passage (31, 32) distincts de façon à diviser un écoulement de carburant dans la zone déterminée en deux écoulements et on fait communiquer les deux passages (31, 32) avec une même zone collectrice (Z3) qui communique avec la sortie de carburant filtré (4b), la zone collectrice (Z3) étant délimitée entre les premier et deuxième éléments séparateurs d'eau (21, 22) qui sont placés en regard l'un de l'autre, l'un des deux passages étant séparé de la zone collectrice (Z3) par le premier élément séparateur d'eau (21) et l'autre des deux passages étant séparé de la zone collectrice (Z3) par le deuxième élément séparateur d'eau (22), ce grâce à quoi les deux écoulements peuvent être routés dans la zone collectrice (Z3), l'écoulement associé au premier chemin de passage (31) étant filtré par le premier élément séparateur d'eau (21) et l'écoulement associé au deuxième chemin de passage (32) étant filtré par le deuxième élément séparateur d'eau (22).

## Patentansprüche

1. Kraftstofffilter (1) mit Wasserabscheider, der dazu bestimmt ist, an eine Kraftstoffumlaufschaltung eines Verbrennungsmotors angeschlossen zu werden, wobei der Filter umfasst:
- ein äußeres Gehäuse (2), das einen Boden (3a), eine Kraftstoffzuleitung und eine Ausgangsleitung (40), die in einem Abstand zum Boden (3a) angeordnet ist, eine untere Kammer (C) zum Sammeln von Wasser, die durch den Boden (3a) begrenzt ist, aufweist,
- ein Filterelement (6), das in dem Gehäuse (2) angeordnet ist, und
- eine Anordnung zur Wasserabscheidung, umfassend:
- ein erstes Wasserabscheidungselement (21) ;
- ein zweites Wasserabscheidungselement (22);
- Tragmittel, die es ermöglichen, das erste Wasserabscheidungselement (21) und das zweite Wasserabscheidungselement (22) zueinander beabstandet zu halten;
**dadurch gekennzeichnet, dass** die Anordnung, die von dem Filterelement (6) getrennt ist, eine im Allgemeinen röhrenförmige äußere Form hat und sich im Inneren des Gehäuses (2) entlang einer Längsachse (A) zwischen einem ersten axialen Ende (23) und einem zweiten axialen Ende (24) erstreckt, das einen Ausgang (26) aufweist, der dicht an die Ausgangsleitung (40) des Gehäuses (2) angeschlossen ist, wobei die Anordnung umfasst:
- mindestens ein Verteilungselement (29), das sich auf der Seite des ersten axialen Endes (23) befindet und einen Rand (B1) des ersten Wasserabscheidungselements mit einem Rand (B2) des zweiten Wasserabscheidungselements dicht verbindet; und
- eine Sammelzone (Z3), die sich parallel zur Längsachse (A) zwischen dem Verteilungselement (29) und dem Ausgang (26) erstreckt, wobei die Sammelzone (Z3) mit dem Ausgang (26) in Verbindung steht, wobei das erste und das zweite Wasserabscheidungselement (21, 22) einander gegenüberliegen, wobei die Sammelzone (Z3) zwischen einer ersten Seitenfläche, die dem ersten Wasserabscheidungselement (21) angehört, und einer zweiten Seitenfläche, die dem zweiten Wasserabscheidungselement (22) angehört, begrenzt ist, um einen ersten Kraftstoffabfluss, der durch das erste Wasserabscheidungselement (21) strömt, und einen zweiten Kraftstoffabfluss, der durch das zweite Wasserabscheidungselement (22) strömt, aufzunehmen.

2. Filter nach Anspruch 1, bei dem das erste und zweite Wasserabscheidungselement (21, 22) jeweils einen hydrophoben Schleier umfassen.

3. Filter nach Anspruch 1 oder 2, bei dem sich das erste Wasserabscheidungselement (21) ringförmig um die Längsachse (A) erstreckt, wobei es einen inneren axialen Durchgang (31) definiert, wobei das erste axiale Ende (23) einen vorzugsweise axialen Eingang (25) für den Zugang zu dem inneren axialen Durchgang (31) aufweist, wobei das Verteilungselement (29) um den Eingang (25) ausgebildet ist.

4. Filter nach Anspruch 3, bei dem das Filterelement (6) von einer Seitenwand des Gehäuses (2) umgeben ist, und die Anordnung zur Wasserabscheidung zumindest teilweise von einer röhrenförmigen Leitung (8; 80), die von der Seitenwand getrennt ist, umgeben ist, um um das zweite Wasserabscheidungselement (22) einen zweiten äußeren Durchgang (32) für den zweiten Abfluss zu begrenzen.

5. Filter nach einem der vorhergehenden Ansprüche, bei dem das erste und zweite Wasserabscheidungselement (21, 22) eine allgemeine Ringform aufweisen und koaxial um die Längsachse (A) angeordnet sind, wobei das erste und zweite axiale Ende (23, 24) das erste und zweite Wasserabscheidungselement (21, 22) miteinander verbinden, um ein Wasserabscheidungsmodul (M) zu bilden, wobei das Verteilungselement (29) Teil der Tragmittel ist.

6. Filter nach einem der vorhergehenden Ansprüche, bei dem das zweite Wasserabscheidungselement (22) das erste Wasserabscheidungselement (21) umgibt, so dass die Sammelzone (Z3) zumindest teilweise Ringform hat, wobei das zweite Wasserabscheidungselement (22) länger als das erste Wasserabscheidungselement (21) ist, das von dem zweiten axialen Ende (24) entfernt ist.

7. Filter nach Anspruch 6, bei dem der Ausgang (26) axial in dem zweiten axialen Ende (24) ausgebildet ist, wobei die Sammelzone (Z3) in der Nähe des zweiten axialen Endes einen Querschnitt hat, der die Längsachse (A) schneidet.

8. Filter nach einem der vorhergehenden Ansprüche, bei dem das Gehäuse (2) einen Eingang (4a) für Rohkraftstoff umfasst, der die Zuleitung bildet, wobei die Ausgangsleitung (40) Teil eines Ausgangs (4b) für gefilterten Kraftstoff ist, wobei das Filterelement dazu vorgesehen ist, den Rohkraftstoff zu reinigen.

9. Filter nach einem der vorhergehenden Ansprüche, bei dem das Filterelement (6) ein oberes Ende, ein unteres Ende und ein Filtermedium (7), das sich zwischen dem oberen Ende und dem unteren Ende erstreckt, umfasst, wobei das Filterelement (6) eine stromaufwärtige Zone (Z1), die mit dem Eingang (4a) für Rohkraftstoff in Verbindung steht, und eine stromabwärtige Zone (Z2) begrenzt.

10. Filter nach Anspruch 9, bei dem die Anordnung zur Wasserabscheidung in der stromabwärtigen Zone (Z2) angeordnet ist, und sich das erste axiale Ende (23) in der Nähe der unteren Kammer (C) erstreckt.

11. Filter nach Anspruch 9 oder 10, bei dem das Filtermedium (7) im Wesentlichen ringförmig ist und sich um eine Zentralachse (X) zwischen dem oberen Ende und dem unteren Ende des Filterelements (6) erstreckt, wobei die Längsachse (A) im Wesentlichen parallel zur Zentralachse (X) ist.

12. Filter nach Anspruch 9 oder 10, umfassend ein Ablenkblech (50; 50'), das in der stromabwärtigen Zone (Z2) in einem Abstand zum Boden (3a) angeordnet ist und eine Querebene (P) in Bezug zur Längsachse (A) definiert, wobei das Filtermedium (7) eine Innenseite (7b) hat, die einen Innenraum (9) begrenzt, wobei das Ablenkblech (50; 50') lotrecht zu dem Innenraum (9) angeordnet ist.

13. Filter nach Anspruch 11 oder 12, bei dem das Filtermedium (7) eine Innenseite (7b) aufweist, die einen Innenraum (9) begrenzt, wobei sich mindestens eines von dem ersten Wasserabscheidungselement (21) und dem zweiten Wasserabscheidungselement (22) in dem Innenraum (9) erstreckt.

14. Filter nach einem der Ansprüche 9 bis 13, bei dem die Ränder (B1, B2) des ersten und zweiten Wasserabscheidungselements (21, 22) auf einer selben Höhe (H) in einem unteren Abteil (V2) des Innenvolumens (V) angeordnet sind, wobei das Filterelement (6) vorzugsweise in einem oberen Abteil (V1) des Innenvolumens (V) angeordnet ist.

15. Verwendung eines ersten Wasserabscheidungselements (21) und eines zweiten Wasserabscheidungselements (22) in einem Kraftstofffilter (1) von dem Typ, umfassend ein Filterelement (6) und ein äußeres Gehäuse (2), das das Filterelement aufnimmt, und das einen Eingang (4a) für Rohkraftstoff und einen Ausgang (4b) für gefilterten Kraftstoff aufweist,
bei der das erste Wasserabscheidungselement (21) und das zweite Wasserabscheidungselement (22) in einer Filteranordnung zusammengefasst werden, die es ermöglicht, das Wasser im Inneren des Gehäuses (2) in einer bestimmten Zone, die sich vorzugsweise stromabwärts (Z2) zu dem Filterelement (6) befindet, abzuscheiden,
**dadurch gekennzeichnet, dass** in der bestimmten Zone zwei getrennte Durchgänge (31, 32) gebildet werden, um einen Kraftstoffabfluss in der bestimmten Zone in zwei Abflüsse zu teilen, und dass die beiden Durchgänge (31, 32) mit einer selben Sammelzone (Z3) verbunden werden, die mit dem Ausgang für gefilterten Kraftstoff (4b) in Verbindung steht, wobei die Sammelzone (Z3) zwischen dem ersten und zweiten Wasserabscheidungselement (21, 22), die einander gegenüberliegen, begrenzt ist, wobei einer der beiden Durchgänge von der Sammelzone (Z3) durch das erste Wasserabscheidungselement (21) getrennt ist, und der andere der beiden Durchgänge von der Sammelzone (Z3) durch das zweite Wasserabscheidungselement (22) getrennt ist, dank dessen die beiden Abflüsse in die Sammelzone (Z3) gelenkt werden können, wobei der Abfluss, der dem ersten Durchgangsweg (31) zugeordnet ist, von dem ersten Wasserabscheidungselement (21) gefiltert wird, und der Abfluss, der dem zweiten Durchgangsweg (32) zugeordnet ist, von dem zweiten Wasserabscheidungselement (22) gefiltert wird.

## Claims

1. Water-separating fuel filter (1), intended to be connected to a circuit for circulating fuel in an internal combustion engine, the filter comprising:
- an external housing (2) having a bottom (3a), a fuel inlet and an outlet pipe (40) arranged at a distance from said bottom (3a), a lower water-collection chamber (C) delimited by said bottom (3a),
- a filtering element (6) housed in the housing (2), and
- a water-separation arrangement comprising:
-- a first water-separating element (21);
-- a second water-separating element (22);
-- support means for keeping the first water-separating element (21) and the second water-separating element (22) spaced apart from each other;
**characterised in that** the arrangement, separate from the filtering element (6), has a roughly tubular external shape and extends inside the housing (2) along a longitudinal axis (A) between a first axial end (23) and a second axial end (24) that has an outlet (26) connected sealingly to the outlet pipe (40) of the housing (2), said arrangement comprising:
- at least one distributing element (29) situated on the same side as the first axial end (23) and sealingly connecting an edge (B1) of the first water-separating element to an edge (B2) of the second water-separating element; and
- a collecting zone (Z3) extending parallel to the longitudinal axis (A) between said distributing element (29) and the outlet (26), the collecting zone (Z3) communicating with the outlet (26), the first and second water-separating elements (21, 22) being facing each other, said collecting zone (Z3) being delimited between a first lateral face belonging to the first water-separating element (21) and a second lateral face belonging to the second water-separating element (22), so as to receive a first flow of fuel passing through the first water-separating element (21) and a second flow of fuel passing through the second water-separating element (22).

2. Filter according to claim 1, in which the first and second water-separating elements (21, 22) each comprise a hydrophobic fabric.

3. Filter according to claim 1 or 2, in which the first water-separating element (21) extends in annular fashion around the longitudinal axis (A) while defining an internal axial passage (31), the first axial end (23) having an inlet (25), preferably axial, for access to the internal axial passage (31), said distributing element (29) being formed around said inlet (25).

4. Filter according to claim 3, in which the filtering element (6) is surrounded by a lateral wall of the housing (2) and the water-separation arrangement is at least partly enveloped by a tubular conduit (8; 80) separate from said lateral wall, so as to delimit, around the second water-separating element (22), a second external passage (32) for said second flow.

5. Filter according to any one of the preceding claims, in which the first and second water-separating elements (21, 22) have a roughly annular shape and are arranged coaxially around the longitudinal axis (A), the first and second axial ends (23, 24) connecting said first and second water-separating elements (21, 22) to each other so as to form a water-separation module (M), the distributing element (29) forming part of the support means.

6. Filter according to any one of the preceding claims, in which the second separating element (22) surrounds the first water-separating element (21) so that the collecting zone (Z3) is at least partly annular in shape, the second water-separating element (22) being longer than the first separating element (21), which is distant from the second axial end (24).

7. Filter according to claim 6, in which the outlet (26) is formed axially in the second axial end (24), the collecting zone (Z3) having, in the vicinity of the second axial end, a cross section that intersects the longitudinal axis (A).

8. Filter according to any one of the preceding claims, in which the housing (2) comprises an untreated-fuel inlet (4a) forming said admission, the outlet pipe (40) forming part of a filtered-fuel outlet (4b), the filtering element being suitable for purifying the untreated fuel.

9. Filter according to any one of the preceding claims, in which the filtering element (6) comprises a top end, a bottom end and a filtering medium (7) extending between the top end and the bottom end, the filtering element (6) delimiting an upstream zone (Z1) communicating with the untreated-fuel inlet (4a) and a downstream zone (Z2).

10. Filter according to claim 9, in which the water-separation arrangement is placed in the downstream zone (Z2) and the first axial end (23) extends in the vicinity of the bottom chamber (C).

11. Filter according to claim 9 or 10, in which the filtering medium (7) is substantially annular and extends around a central axis (X) between the top end and the bottom end of the filtering element (6), the longitudinal axis (A) being substantially parallel to the central axis (X).

12. Filter according to claim 9 or 10, comprising a deflector (50; 50') arranged in the downstream zone (Z2) at a distance from the bottom (3a) and defining a transverse plane (P) with respect to the longitudinal axis (A), the filtering medium (7) having an internal face (7b) that delimits an internal space (9), the deflector (50; 50') being placed vertically in line with said internal space (9).

13. Filter according to claim 11 or 12, in which the filtering medium (7) has an internal face (7b) that delimits an internal space (9), at least one from among the first water-separating element (21) and the second water-separating element (22) extending in the internal space (9).

14. Filter according to any one of claims 9 to 13, in which said edges (B1, B2) of the first and second water-separating elements (21, 22) are arranged at the same height (H) in a bottom compartment (V2) of the internal volume (V), the filtering element (6) preferably being housed in a top compartment (V1) of the internal volume (V).

15. Use of a first water-separating element (21) and of a second water-separating element (22), in a fuel filter (1) of the type comprising a filtering element (6) and an external housing (2) housing the filtering element and which has an untreated-fuel inlet (4a) and a filtered-fuel outlet (4b),
in which the first water-separating element (21) and the second water-separating element (22) are grouped together in a filtration arrangement for separating the water inside the housing (2) in a given zone that is preferably downstream (Z2) with respect to the filtering element (6),
**characterised in that** two separated passages (31, 32) are formed in the given zone so as to divide a flow of fuel in the given zone into two flows, and the two passages (31, 32) are connected to the same collecting zone (Z3), which communicates with the filtered-fuel outlet (4b), the collecting zone (Z3) being delimited between the first and second water-separating elements (21, 22) that are placed opposite each other, one of the two passages being separated from the collecting zone (Z3) by a first water-separating element (21) and the other one of the two passages being separated from the collecting zone (Z3) by the second water-separating element (22), by means of which the two flows can be routed in the collecting zone (Z3), the flow associated with the first passage path (31) being filtered by the first water-separating element (21) and the flow associated with the second passage path (32) being filtered by the second water-separating element (22).
